# EUROPÄISCHE PATENTANMELDUNG

(11) **EP 1 072 347 A2**
(43) Veröffentlichungstag der Anmeldung: **31.01.2001**
(21) Anmeldenummer: 00114357.7
(22) Anmeldetag: 05.07.2000
(51) Int. Cl.: B23C 5/04, B23C 5/20

(54) **Walzenfräser, insbesondere Helix-Fräser**

(30) Priorität: 28.07.1999 DE 29913164 U
(71) Anmelder: INGERSOLL MASCHINEN UND WERKZEUGE GESELLSCHAFT MIT BESCHRÄNKTER HAFTUNG, 57299 Burbach (DE)
(72) Erfinder: Scheidtweiler Lothar, 57299 Burbach (DE)
(74) Vertreter: Valentin, Ekkehard, Dipl.-Ing.

(57) **Zusammenfassung**

Bei einem Walzenfräser (1), insbesondere Helix-Fräser, der mit Wendeschneidplatten (2), insbesondere Hartmetall-Wendeschneidplatten, bestückt ist, sind die Schneidkanten der Wendeschneidplatten (2) in ihren Eckbereichen nach unten abfallend ausgebildet.

## Beschreibung

Die Erfindung betrifft einen Walzenfräser, insbesondere Helix-Fräser, der mit Wendeschneidplatten, insbesondere Hartmetall-Wendeschneidplatten, bestückt ist.

Derartige Walzenfräser, die eine Ballenlänge von beispielsweise bis 1,50 m besitzen, werden zur Bearbeitung der Oberflächen von NE-Metallbändern bzw. Blechen eingesetzt, um von diesen die Zunderschicht zu entfernen, die beim folgenden Warmwalzen ansonsten in die Oberflächen eingewalzt würde. Das zu fräsende Metallband wird in der Regel von einem Wickelbund (Coil) abgewickelt und der Fräsmaschine zugeführt, die zwei im Abstand aufeinander folgende Walzenfräser aufweist. Nach der somit aufeinanderfolgenden Fräsbearbeitung der jeweils oberen und unteren Band-Oberfläche wird das Band dann in der Regel wieder aufgewickelt und für den weiteren Walzprozeß bereitgestellt.

Solche Walzenfräser sind üblicherweise mit HSS-Messern bestückt, die mittels eines durch Schrauben befestigten Keils vor Brust geklemmt werden. Beim Verspannen der Keile entsteht einerseits zwischen dem Fräskörper und dem Keil sowie andererseits zwischen dem Messer und dem Keil an den Kontaktflächen eine hohe Flächenpressung. Bei dieser Bauweise ist es möglich, durch das Nachsetzen der Messer deren Wirtschaftlichkeit zu verbessern. Das notwendige Nachschleifen der verschleißenden bzw. stumpfer werdenden Messer erfordert nämlich einigen Aufwand.

Die Wirtschaftlichkeit ließe sich zwar mit in der Frästechnik seit langem eingesetzten Wendeschneidplatten, insbesondere Hartmetall-Wendeschneidplatten, verbessern. Jedoch haben sich bei mit Hartmetall-Wendeschneidplatten bestückten Helix-Walzenfräsern erhebliche Probleme gezeigt. Diese rühren zum einen aus Toleranzen im Plattensitz und von der Wendeplatte her, was beim Fräsen zu Absätzen bzw. abrupten Kanten an den Band-Oberflächen führt. Zum anderen bedingt deren Befestigung in den jeweiligen Plattensitzen unter einem Winkel am Grundkörper geometrisch, daß die Schneide den Hüllkreis verläßt. Es stellt sich dann eine Wellenform ein, weil die Wendeschneidplatte mit ihrer jeweils im Einsatz befindlichen Schneidkante nicht am Hüllkreis zum Schnitt kommen kann; es liegen nur die äußeren Punkte der Schneide am Hüllkreis an. Am Metallband sind damit trotz der Fräsung erhabene Bereiche vorhanden, womit beim späteren Warmwalzen nachteilige Einwalzungen unvermeidlich sind.

Der Erfindung liegt daher die Aufgabe zugrunde, einen gattungsgemäßen Walzenfräser ohne die beschriebenen Nachteile beim Einsatz von Wendeschneidplatten, insbesondere Hartmetall-Wendeschneidplatten, zu schaffen.

Diese Aufgabe wird in verblüffend einfacher Weise dadurch gelöst, daß die Schneidkanten der Wendeschneidplatten in ihren Eckbereichen nach unten abfallend ausgebildet sind. Indem die Wendeschneidplatten in den Eckbereichen ihrer Schneidkanten mit einem abfallenden Radius ausgebildet sind, liegen nunmehr die Schneidkanten über ihre gesamte verbleibende Länge, nämlich dem Längenabschnitt zwischen den beidendig abfallenden Radien, dem Hüllkreis an und sorgen für eine durchgängige Bearbeitung der Oberflächen, während hingegen die Überdeckungen quasi ineinander eingespiegelt werden, so daß keine Absätze bzw. abrupten Kanten mehr vorliegen, vielmehr eine ununterbrochene Fräsbearbeitung der Oberflächen möglich wird.

Eine bevorzugte Ausführung der Erfindung sieht vor, daß die Schneidkanten insgesamt als eine Bogenschneide ausgebildet sind. Die Wendeschneidplatte kann acht dieser balligen Schneidkanten besitzen, nämlich vier auf jeder Seite, und bietet somit eine hohe Wirtshaftlichkeit. Die Bogenschneide läßt sich durch einen entsprechenden Schliff der Platte bzw. deren Schneidkanten nur außerhalb des verbleibenden inneren Kreises, d.h. der Bereiche, die den Hüllikreis geometrisch bedingt verlassen erreichen, wobei die Bogenschneide zu ihren Ecken hin jeweils stark abfällt. Mit dieser Konturgebung der Schneidkanten bei Wendeschneidplatten mit acht Schneidkanten lassen sich sowohl Absätze bzw. abrupte Kanten an den Bandoberflächen als auch erhobene Bereiche bei der Fräsbearbeitung vermeiden.

Weitere Merkmale und Vorteile der Erfindung ergeben sich aus den Ansprüchen und der nachfogenden Beschreibung eines in der Zeichnung dargestellten Ausführungsbeispiels der Erfindung. Es zeigen:
- Fig. 1: die Gesamtansicht eines Helix-Walzenfräsers, teilgeschnitten dargestellt;
- Fig. 2: als Einzelheit eine acht Schneidkanten aufweisende Hartmetall-Wendeschneidplatte, in perspektivischer Ansicht liegend dargestellt;
- Fig. 3: die Wendeschneidplatte gemäß Fig. 2 in demgegenüber um 90° aufgerichteter Lage, perspektivisch dargestellt; und
- Fig. 4: in vergrößerter Darstellung die Einzelheit "X" gemäß Fig. 3.

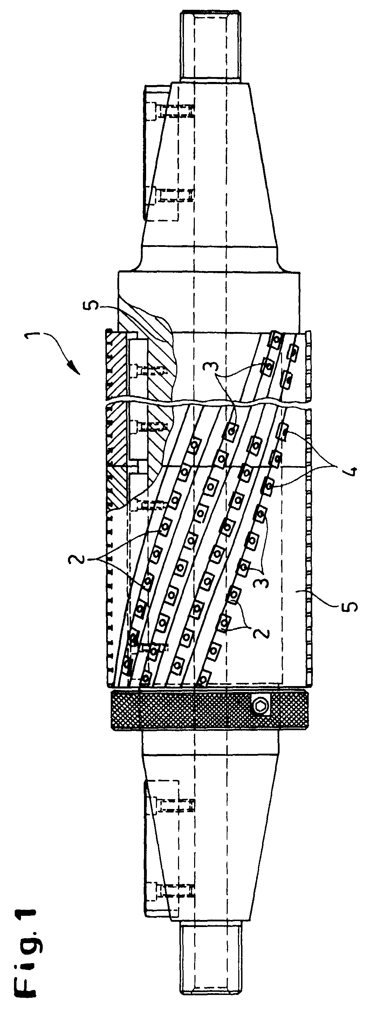

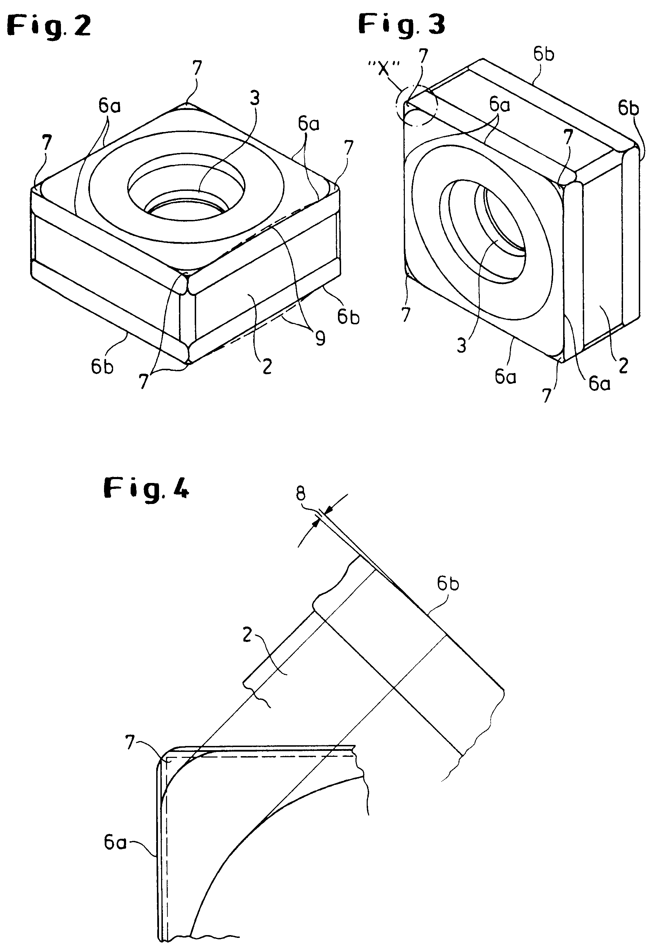

Ein in Fig. 1 gezeigter Walzenfräser 1 besitzt zahlreiche, unter einem Helix-Winkel von 20°spiralförmig angeordnete Reihen mit darin in jeweils zugehörigen Sitzen angeordneten Wendeschneidplatten 2, die ein mittiges Durchgangsloch 3 zur Aufnahme einer Innen-Sechskantschraube 4 aufweisen, die in den Walzen-Grundkörper 5 eingeschraubt werden und die Wendeschneidptatten 2 in ihrer Lage festlegen. Die Wendeschneidplatten 2 besitzen gemäß den Fig. 2 bis 4 auf jeder Seite vier gleich lange Schneidkanten 6a bzw. 6b. Diese Schneiden 6a, 6b sind in ihren Eckbereichen 7 mit einem nach unten abfallenden Radius 8 (vgl. Fig. 4) ausgebildet. Dies ergibt sich auch dann, wenn die Schneiden 6a, 6b insgesamt ballig, d.h. als Bogenschneide 9 ausgebildet sind, wie in Fig. 2 für zwei der dort insgesamt acht Schneiden gestrichelt beispielhaft eingetrragen.

Die solchermaßen konfigurierten, in dem Walzengrundkörper 2 liegend befestigten Wendeschneidplatten 2 bewirken aufgrund der abfallenden Eckbereiche 7 bzw. bei insgesamt balliger Ausbildung der Schneiden bzw. Schneidkanten 6a, 6b, daß an den zu bearbeitenden Metallband-Oberflächen weder Absätze mit abrupten, unbearbeiteten Übergängen bzw. Kanten noch erhabene Bereiche vorliegen, da die wirksamen Schneidkanten den Hüllkreis nicht verlassen und Überdeckungen ineinander eingespiegelt werden.

## Patentansprüche

1. Walzenfräser, insbesondere Helix-Fräser, der mit Wendeschneidplatten, insbesondere Hartmetall-Wendeschneidplatten, bestückt ist,
**dadurch gekennzeichnet,**
daß die Schneidkanten (6a, 6b) der Wendeschneidplatten (2) in ihren Eckbereichen (7) nach unten abfallend ausgebildet sind.

2. Walzenfräser nach Anspruch 1,
**dadurch gekennzeichnet,**
daß die Schneidkanten (6a, 6b) insgesamt als eine Bogenschneide (9) ausgebildet sind.
